# EUROPEAN PATENT SPECIFICATION

(11) **EP 3 430 340 B1**
(45) Date of publication and mention of the grant of the patent: **08.03.2023**
(21) Application number: 17710901.4
(22) Date of filing: 14.03.2017
(51) Int. Cl.: F28D 21/00, F28F 13/06, F28D 7/16, F02M 26/32, F28F 9/02

(54) **HEAT EXCHANGER FOR GASES, IN PARTICULAR THE EXHAUST GASES OF AN ENGINE**
WÄRMETAUSCHER FÜR GASE, INSBESONDERE ABGASE VON VERBRENNUNGSMOTOREN
ÉCHANGEUR DE CHALEUR PUR GAZ, EN PARTICULIER DES GAZ D'ÉCHAPPEMENT DES MOTEURS

(30) Priority: 14.03.2016 ES 201630294
(43) Date of publication of application: 23.01.2019
(73) Proprietor: Valeo Termico S.A., 50011 Zaragoza (ES)
(72) Inventor: BRAVO RODRIGUEZ, Yolanda, 50011 Zaragoza (ES); CUESTA, Javier, 50011 Zaragoza (ES); DE FRANCISCO MORENO, Juan Carlos, 50011 Zaragoza (ES); LOPEZ LAZARO, Francisco, 50011 Zaragoza (ES)
(74) Representative: Valeo Systèmes Thermiques
(86) International application number: PCT/EP2017/056038
(87) International publication number: WO 2017/157966

(56) References cited:
- EP-A1- 2 728 155
- EP-A2- 2 502 016
- DE-A1-102014 202 447
- JP-A- 2001 027 158
- JP-A- 2012 132 614
- US-A1- 2015 253 085

## Description

### Technical Sector

The present invention relates generally to a heat exchanger for gases, in particular the exhaust gases of an engine, which comprises some means for preventing the overheating of the cooling fluid directing it towards the gas inlet, and more particularly to a heat exchanger that allows said directing of cooling fluid in a precise and controlled manner.

The invention applies especially to engine exhaust gas recirculation heat exchangers ("Exhaust Gas Recirculation Coolers" or EGRC)).

### State of the Prior Art

The main function of EGR heat exchangers is the exchange of heat between the exhaust gases and the cooling fluid, in order to cool the gases.

Currently, EGR heat exchangers are widely used for diesel applications in order to reduce emissions, and are also used in petrol applications for reducing fuel consumption.

The market is tending to reduce the size of engines, and the application of EGR heat exchangers not only in high pressure (HP) but also in low pressure (LP) applications; both have an impact on the design of EGR heat exchangers. Vehicle manufacturers require EGR heat exchangers with higher performance and, at the same time, the space available for placing the exchanger and its components is becoming smaller and more difficult to integrate.

In addition, in many applications the flow of cooling fluid available for cooling the exhaust gases is tending to be less although exchanger performance has been increasing.

The current configuration of EGR exchangers on the market corresponds to a metal heat exchanger generally manufactured from stainless steel or aluminium.

Basically, there are two types of EGR heat exchangers: a first type consists of a casing inside which is arranged a bundle of parallel tubes for the passage of gases, with the coolant circulating through the casing, outside the tubes, and the second type consists of a series of parallel plates that form the heat exchange surfaces, so that the exhaust gases and the coolant circulate between two plates, in alternating layers, possibly including fins for better heat exchange.

In the case of tube bundle heat exchangers, the join between the tubes and the casing may be of different types. Generally, the tubes are attached at their ends between two support plates coupled at each end of the casing, both supporting plates presenting a plurality of orifices for placing the respective tubes.

Said support plates are in turn attached to some means of connection with the recirculation line, which may consist of a V connection or a peripheral edge connection or flange, depending on the design of the recirculation line where the exchanger is assembled. The peripheral flange may be assembled together with a gas reservoir, so that the gas reservoir is an intermediate part between the casing and the flange, or the flange may be assembled directly onto the casing.

In heat exchangers, the temperature of the exhaust gas generally ranges between 400 °C and 950 °C, due to the new applications in petrol vehicles, while the temperature of the coolant is normally between 80 °C and 95 °C. Due to the high temperature of the exhaust gases there is a significant risk of overheating of the coolant, even reaching boiling, which could cause a rupture in the heat exchanger. Accordingly, widespread boiling should be avoided for any EGR exchanger design.

This is a significant issue for the new generations of EGR exchangers, where the use of fins improves the exchange of heat and accordingly increases the temperature of the coolant locally in the exhaust gas inlet areas.

The use of transverse baffles and the orientation that the coolant tubes must have should be considered in order to improve the distribution of the coolant flow and prevent stagnation points that would give rise to local increases in the temperature of the coolant. Coolant pipes can be used to shift the position of the coolant inlet to the vicinity of the gas inlet end of the exchanger block. There are, therefore, some design rules establishing the maximum distance, or safety distance, that the coolant inlet has to have with respect to the gas inlet in order to prevent the coolant from boiling.

There are various proposals the purpose of which is to provide various mechanisms or configurations for preventing the cooling fluid from overheating and boiling, ranging from the arrangement of various types of fins on the inside of the casing, to the provision of temperature-reducing configurations on the outer surface of the tubes close to the gas inlet. The following patent documents describe some of these proposals: WO2012163954, JP2010144979, US2010044019, JP2011226722, JP2010112355, JP2011085017. A heat exchanger according to the preamble of claim 1 is disclosed in JP 2012 132614 A.

Despite the existence of said design rules, for some applications these cannot be met, since they do not allow the flexibility of being able to locate the coolant inlet close to the exhaust gas inlet. Such is the case for which the coolant inlet (as well as the outlet) is defined in a support plate which is mounted directly on the engine block, so that the position of said inlet is marked by the engine manufacturer and cannot be changed by the manufacturer of the heat exchanger. None of the patent documents cited above address a solution to the problem of the coolant boiling when the aforementioned design rules cannot be met.

A patent document does exist, in particular patent ES2394406B1, belonging to the same holder as the present application, that actually provides a solution to the problem of the risk of the coolant overheating, even when the coolant inlet is arranged away from the gas inlet, at a distance greater than that previously identified as a safety distance.

The solution provided by patent ES2394406B1 includes the elements of the preamble of Claim 1 of the present invention, i.e. the use of some deflection means for redirecting the flow of the incoming cooling fluid towards the area of the exchanger gas inlet.

The solution put forward by patent ES2394406B1 can clearly be improved, as it is rather vague as to the directing of the cooling fluid towards the area to be cooled, not allowing selectively aiming towards one or more sub-areas of said area, in addition to making the cooling fluid flow with a low speed over the area to be cooled.

It therefore appears necessary to offer an alternative to the prior art that covers the gaps found in same, by providing a solution to the aforementioned technical problem that is much more precise and optimized than that which patent ES2394406B1 offers.

### Explanation of the Invention

To this end, the present invention relates to a heat exchanger for gases, in particular for exhaust gases of an engine according to claim 1, that, among other features, in a way known *per se* comprises:
- a bundle of tubes intended for the circulation of the exhaust gases;
- a casing that houses therein said bundle of tubes, extending longitudinally and which comprises:
   - a gas inlet end and a gas outlet end on which both support plates are coupled, to which the ends of the tubes of said bundle of tubes are attached, communicating with the outside of the casing; and
   - a cooling fluid inlet orifice and a cooling fluid outlet orifice for the circulation of a cooling fluid through the inside of the casing in contact with the bundle of tubes for heat exchange with the exhaust gases circulating through same;
      and
- means for preventing the overheating of said cooling fluid inside the casing, which comprise some deflection means arranged inside the casing and suitable for directing the flow of cooling fluid entering via said inlet orifice towards said gas inlet end.

Unlike the exchangers known to the prior art, in particular unlike that disclosed in ES2394406B1, in the one provided by the present invention the deflection means comprise at least two through openings for access to an area inside the casing adjacent to the gas inlet end, for the cooling fluid to pass through the openings directed from the cooling fluid inlet orifice, said through-openings being arranged and dimensioned for directing a jet of cooling fluid towards a sub-area of said area. The aforementioned through-opening allows the aforesaid jet of cooling fluid to be directed with precision and with a desired speed towards the aforesaid sub-area of said area.

In accordance with one embodiment, the aforementioned inlet orifice is arranged, with respect to the aforesaid gas inlet end, at a distance greater than a safety distance established for preventing the cooling fluid from boiling, which, in general, is indicated by the previously specified design rules, established in order to indicate that if this is exceeded there is a risk of the cooling fluid boiling.

Preferably, the deflection means include a longitudinal baffle (i.e. that extends in the longitudinal direction of the casing).

According to the invention, the cooling fluid entering via the cooling fluid inlet orifice previously passes through the longitudinal baffle via at least one other through-opening, flows in contact with one face of the longitudinal baffle opposite said face facing the cooling fluid inlet orifice, in the direction of said area, and finally passes through at least said through-opening the aforesaid jet of cooling fluid being directed towards the sub-area of said area. In this case, on the path that goes from the cooling fluid inlet orifice towards the aforesaid sub-area, the cooling fluid passes through the longitudinal baffle twice.

Thus the cooling of the most critical areas is considerably improved, i.e. those that have a greater risk of overheating, and even cause the cooling fluid to boil, since the jet of fluid is directed with great accuracy towards same and, in addition, with a speed greater than those of the known proposals, which further reduces the risk of stagnation and boiling of same.

In accordance with one embodiment, the deflection means of the exchanger of the present invention comprise two or more of the aforesaid through-openings arranged and dimensioned for directing some respective jets of cooling fluid towards different sub-areas of the area inside the casing adjacent to the gas inlet end.

According to the invention, the exchanger of the present invention comprises a first column of tubes, of the aforesaid bundle of tubes, stacked longitudinally, where the aforementioned sub-area or each of the aforesaid sub-areas covers a section of passage, in the direction of stacking, between two respective adjoining tubes of the first column of tubes.

Advantageously, the exchanger of the present invention comprises at least one second column of tubes, of the aforesaid bundle of tubes, stacked longitudinally, and arranged in parallel with the first, the longitudinal baffle of the deflection means being arranged between the first and the second column of tubes, leaving the through-opening, or each of the through-openings, arranged in the longitudinal baffle between the aforesaid section of passage of the first column of tubes and a section of passage of the second column of tubes defined, in the direction of stacking, between two respective adjoining tubes of the second column of tubes.

By means of such an arrangement of the longitudinal baffle behind at least one column of tubes, or advantageously behind more than one, from the wall of the casing in which the cooling fluid inlet orifice is located, the longitudinal baffle can be arranged at a suitable distance for fulfilling the function for which it is designed, i.e. for directing the cooling fluid towards the aforementioned sub-area or sub-areas from the cooling fluid inlet orifice, thus allowing the tubes located in front of the longitudinal baffle to be cooled directly.

In one embodiment, the deflection means include at least one transverse baffle arranged inside the casing, which includes some extensions that block the passage of the cooling fluid flow at least in the circulation direction of the gas flow.

In general, the aforesaid transverse baffle is tightly attached to the longitudinal baffle.

In accordance with one embodiment, the transverse baffle defines two or more through-openings, framed by the corresponding extensions of same, each of the through-openings being passed through by a respective tube of at least the second column of tubes.

In one embodiment, the heat exchanger of the present invention comprises a third column of tubes, of the aforementioned bundle of tubes, stacked longitudinally, the tubes of the third column of tubes also passing through the through-openings of the transverse baffle.

In accordance with one embodiment, the transverse baffle is arranged perpendicularly with respect to the longitudinal baffle.

In one embodiment, the transverse baffle is an end transverse baffle arranged next to one of the ends of the longitudinal baffle.

In another embodiment, alternative or complementary to the previous one, the transverse baffle is an intermediate transverse baffle arranged away from one of the ends of the longitudinal baffle.

In accordance with one embodiment, the aforesaid intermediate transverse baffle is arranged inside the casing in a plane normal to the longitudinal direction of same, and the extensions included in same block the passage of the flow of cooling fluid entering via the inlet orifice towards the gas outlet end, in the direction of the circulation of the gas flow, so that it helps, together with the longitudinal baffle, to direct the cooling fluid towards the gas inlet.

In general, the cooling fluid inlet orifice is arranged, in a longitudinal direction, between the intermediate transverse baffle and the gas inlet end, closer to the intermediate transverse baffle than the gas inlet end.

With regard to the cooling fluid outlet orifice, in one embodiment this is arranged, in a longitudinal direction, between the intermediate transverse baffle and the gas outlet end.

The cooling fluid inlet and/or outlet orifices are defined in a wall of the casing, in accordance with one embodiment.

In accordance with one embodiment, the intermediate transverse baffle is attached to the longitudinal baffle, and the deflection means comprise two end transverse baffles, each of them attached to a respective end of the longitudinal baffle, adjacent to, respectively, the gas inlet end and the gas outlet end of the casing, and including some extensions that block the passage of the flow of cooling fluid towards the gas inlet and outlet ends, both the intermediate transverse baffle and the end transverse baffles being extended towards the wall of the casing in which the cooling fluid inlet orifice is defined.

In a variant of said embodiment, the intermediate and end transverse baffles are arranged in parallel and each of them defines two or more through-openings, framed by the corresponding extensions of same, which are aligned with those of the rest of the transverse baffles, each alignment of through-openings being passed through by a respective tube of at least the second column of tubes, that is firmly coupled tightly to the extensions that frame the openings, so that the tubes support the transverse baffles and therefore the longitudinal baffle attached to same.

In accordance with one embodiment, the cooling fluid outlet orifice is defined in the same wall of the casing in which the inlet orifice is defined, at a point arranged, in a longitudinal direction, between the gas outlet end and the intermediate transverse baffle.

In an alternative embodiment, the cooling fluid outlet orifice is defined in a wall of the casing that is not the wall in which the inlet orifice is defined, at a point arranged, in a longitudinal direction, between the gas outlet end and the longitudinal position of the intermediate transverse baffle.

Advantageously, the deflection means comprise one or more additional through-openings dimensioned and arranged, in the longitudinal baffle, for the passage of the cooling fluid from the inside of the casing towards the cooling fluid outlet orifice.

In accordance with one embodiment, said or each of said additional through-openings is arranged between the section of passage of the first column of tubes and the section of passage of the second column of tubes, in a region adjacent to the gas outlet end of the casing.

Likewise, optionally, the longitudinal baffle also comprises one or more holes arranged and dimensioned for allowing the passage of the circulating cooling fluid to and from intermediate areas of the inside of the casing, in order to redistribute the cooling fluid more evenly through the inside of the casing and thus to cool all the sections of all the tubes.

In general, the tubes are of rectangular section, although tubes with other kinds of sections (circular, oval, etc.), are also possible in other embodiments.

With regard to the material of which the deflection means are made, this is, according to the embodiment, metal or plastic.

It should be emphasized that the fact that the baffles (unlike those of ES2394406B1) are not welded to the casing of the exchanger but are supported by the tubes of the bundle of tubes themselves, allows the use, for their manufacture, of non-metallic materials, such as the aforesaid plastic, which allows their cost to be considerably reduced.

### Brief Description of the Drawings

The foregoing and other advantages and features will be more fully understood from the following detailed description of some embodiments with reference to the attached drawings, which should be taken as illustrative and not restrictive, in which:
Figure 1 is a perspective view depicting the exchanger provided by the present invention, in one embodiment, together with a support plate to an engine block, coupled to the casing of the exchanger;
Figure 2 illustrates, also by means of a perspective view, the same embodiment as Figure 1, but without depicting the casing of the exchanger, in order to reveal the elements housed therein;
Figure 3 is another perspective view that illustrates the same embodiment as Figure 1, but without the support plate illustrated there, in order to reveal the outer face of the casing wall to be attached to the support plate;
Figure 4 depicts, in perspective, the deflection means included in the exchanger provided by the present invention, in one embodiment;
Figure 5 depicts, in perspective, the same deflection means illustrated in Figure 4, but with a tube of the exchanger inserted through an alignment of three through-openings of three respective transverse baffles of same;
Figure 6 depicts a cross-section of the elements illustrated in Figure 2, made through a longitudinal section plane arranged at the height of the coolant inlet orifice of the support plate;
Figure 7 depicts, by means of a perspective view from behind and positionally inverted in relation to the view in Figure 4, the deflection means illustrated in Figure 4, but with six tubes of the exchanger, each of them inserted through a respective alignment of three through-openings of three respective transverse baffles of same; and
Figure 8 depicts, in perspective, the tubes of the exchanger provided by the present invention together with the deflection means included in same, for the same embodiment illustrated in Figure 2, as well as an expanded detail that reveals the sections of passage between tubes of the same column of tubes.

### Detailed Description of Some Embodiments

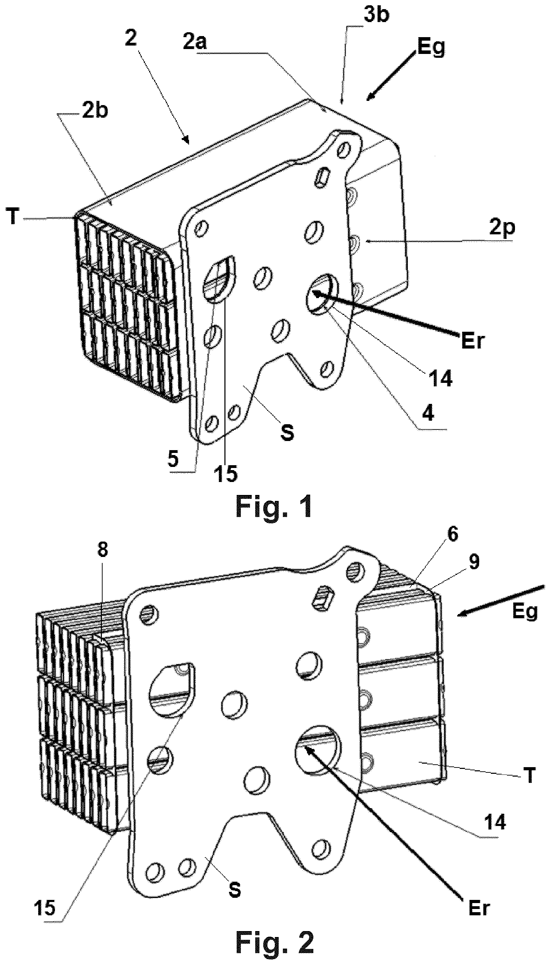

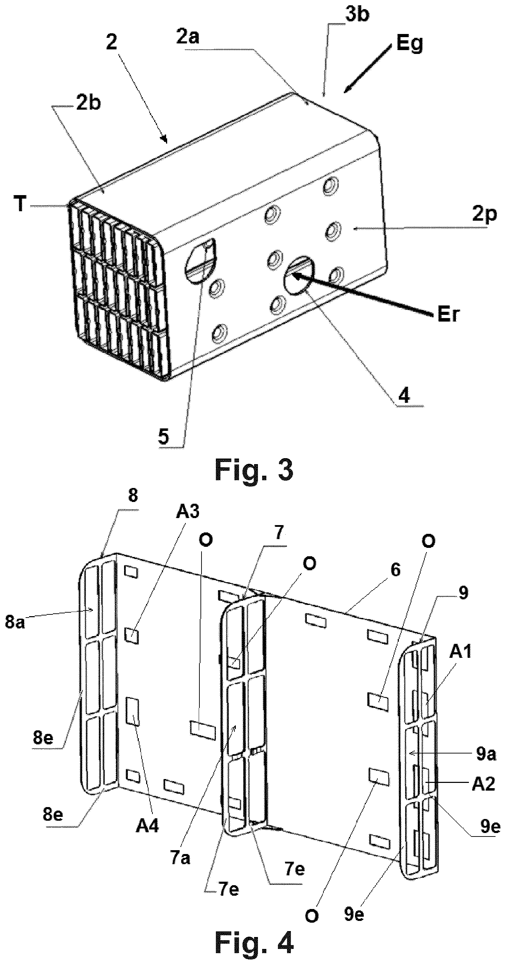

As seen in the attached figures, in particular in Figures 1 and 3, the present invention relates to a heat exchanger 1 for gases, in particular for the exhaust gases of an engine according to claim 1, which comprises, among other features:
- a bundle of tubes T intended for the circulation of the exhaust gases; and
- a casing 2 that houses therein the bundle of tubes, extending longitudinally and which comprises:
   - a gas inlet end 2a and a gas outlet end 2b on which both support plates (not illustrated) are coupled, to which the ends of the tubes of the bundle of tubes T are attached, communicating with the outside of the casing 2; and
   - a cooling fluid inlet orifice 4 and a cooling fluid outlet orifice 5 for the circulation of a cooling fluid through the inside of the casing 2 in contact with the bundle of tubes T for heat exchange with the exhaust gases circulating through same.

In Figures 1, 2 and 3 the reference Eg indicates the gas inlet in the casing 2 and the reference Er indicates the cooling fluid inlet.

Figure 1, and in particular, Figure 2, reveals how the cooling fluid inlet orifice 4 is defined in a wall 2p of the casing 2 closer to a mid-point of the wall 2p, located at an average distance in the longitudinal direction in which the casing 2 extends, than the end of the wall 2p adjacent to the gas inlet end 2a. Such a location of the cooling fluid inlet orifice 4 is considered, conventionally, as associated with a distance greater than a safety distance established for preventing the cooling fluid from boiling.

Such an undesirable location for the inlet orifice 4, in general, is because the exchanger is designed for applications that do not allow the flexibility of being able to locate the coolant inlet close to the exhaust gas inlet. Such is the case illustrated in Figures 1 and 2, in which the casing 2 is attached to or placed up against a support plate S which is mounted directly on the engine block of the vehicle in which the heat exchanger is installed, the aforesaid support plate S offering some cooling fluid inlet 14 and outlet 15 through-orifices communicating with the inlet 4 and outlet 5 orifices of the casing 2. In such support plates S, the position of the inlet orifice 14 (and also that of the outlet 15) is marked by the engine manufacturer and cannot be changed by the manufacturer of the heat exchanger.

In order to prevent the overheating and even the boiling of the cooling fluid in such applications, i.e. when the inlet orifice 4 of same is at the aforementioned distance greater than the safety distance, the exchanger of the present invention further comprises some means for preventing the overheating of the cooling fluid inside the casing 2, which comprise some deflection means which include, as can be seen to a greater or lesser extent, in Figures 2, 4, 5, 6, 7 and 8, a longitudinal baffle 6 arranged inside the casing 2 and suitable for directing the flow of the cooling fluid entering via the inlet orifice 4 towards the gas inlet end 2a, in this case in counterflow with respect to the circulation of the gas flow. In this case, on the path that goes from the cooling fluid inlet orifice towards the aforesaid sub-area, the cooling fluid passes through the longitudinal baffle 6 only once.

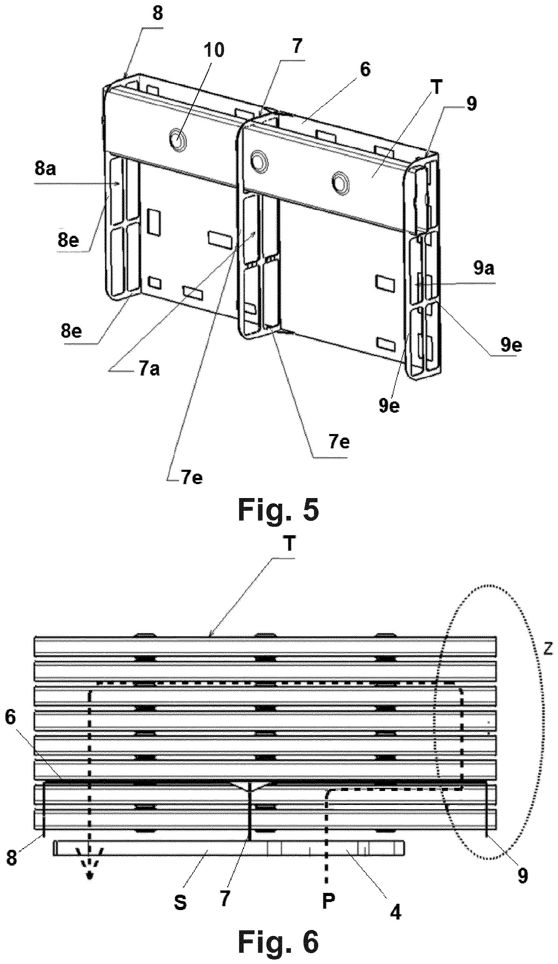

As depicted in Figures 4, 5 and 7, the longitudinal baffle includes some through-openings A1, A2 for access to an area Z inside the casing 2 (see Figure 6) adjacent to the gas inlet end 2a, for the passage therethrough of the cooling fluid directed from the cooling fluid inlet orifice 4, each of said through-openings A1, A2 being arranged and dimensioned for directing some respective cooling fluid jets towards different sub-areas of the area Z.

The deflection means of the exchanger of the present invention also include, in the embodiment illustrated in the attached figures, three transverse baffles 7, 8, 9 arranged inside the casing 2 in a plane normal to the longitudinal direction of same, in particular an intermediate transverse baffle 7 and two end transverse baffles 8, 9, as can be seen in particular in Figures 4, 5, 6, 7 and 8.

As can be seen in particular in the aforesaid figures (interpreting same taking into account Figures 1 and 2, with regard to the positional references with respect to the wall 2p of the casing 2), the intermediate transverse baffle 7 extends from an intermediate region of the longitudinal baffle 6 in the direction of the wall 2p of the casing 2, and is attached to or integrated with the longitudinal baffle 6. Each of the end transverse baffles 8, 9 is likewise attached to, or integrated with, a respective end of the longitudinal baffle 6, adjacent to, respectively, the gas inlet end 2a and outlet end 2b of the casing 2 (see Figures 2 and 3) .

In Figures 4 and 5 it can be seen how the intermediate transverse baffle 7 includes some extensions 7e that block the passage of the flow of cooling fluid entering via the inlet orifice 4 towards the gas inlet end 2b, in the direction of the circulation of the gas flow, and that each of the end transverse baffles 8, 9 includes some extensions 8e, 9e that block the passage of the cooling fluid flow towards the gas inlet 2a and outlet 2b ends, respectively.

Figure 6, in a simplified way, depicts the trajectory P that the cooling fluid follows through a cross-section at the height of the cooling fluid inlet orifices 4, 14. Obviously, the actual trajectory is much more complex, the cooling fluid being distributed at different heights and not only in a horizontal direction.

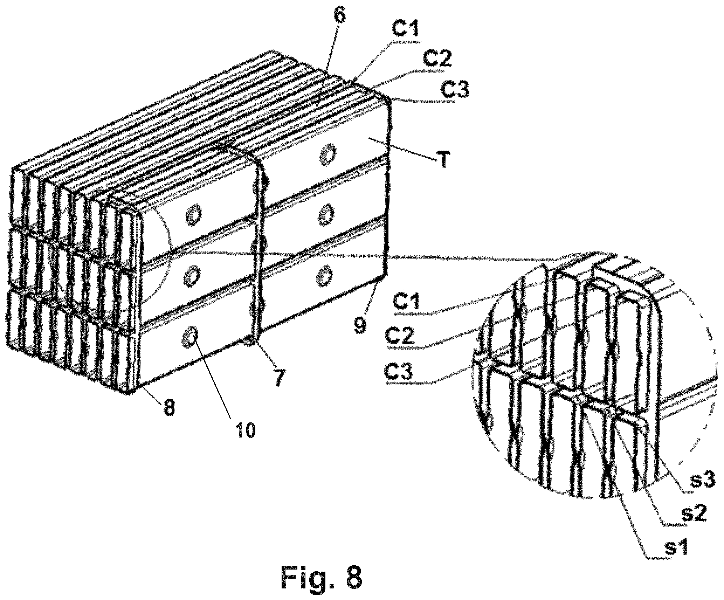

In particular in Figure 8 it can be seen how the exchanger of the present invention comprises a plurality of columns of tubes of rectangular section, stacked longitudinally, in particular three tubes T per column, the longitudinal baffle being arranged between a first column C1 and a second column C2 of tubes arranged parallel to each other. In particular, in the illustrated embodiment, the longitudinal baffle 6 is located, taking as a positional reference the wall 2p of the casing 2 (see Figures 1 and 2), behind two columns of tubes, column C2 and column C3.

The expanded detail of Figure 8 reveals that each of the aforementioned sub-areas covers a section of passage s1 in the direction of stacking, between two respective adjoining tubes of the first column of tubes C1, and that the through-opening A1 is arranged, respectively, between the section of passage s1 defined, in the direction of stacking, between the two upper tubes T of column C1 (according to the position illustrated in Figure 8) and a section of passage s2 defined, in the direction of stacking, between two respective adjoining tubes of the second column of tubes C2. Similarly, the through-opening A2 is defined between two corresponding sections of passage s1, s2 defined between two respective pairs of lower and adjoining tubes T of columns C1 and C2.

This means that the jet of cooling fluid that passes out through the opening A1 is directed at the section of passage s1 defined between the two upper tubes T of column C1, and that the jet of cooling fluid that passes out through the opening A2 is directed at the section of passage s1 defined between the two lower tubes T of column C1.

In the illustrated embodiment (see Figure 8), the exchanger of the invention comprises a third column of tubes C3, stacked longitudinally, and arranged, in parallel, between the second column of tubes C2 and the wall 2p of the casing 2 in which the cooling fluid inlet orifice 4 is defined, thus leaving the longitudinal baffle 6 at a distance, with respect to the wall 2p, considered appropriate for a good distribution of the cooling fluid.

As can be seen, in particular, in Figures 4 and 5, the intermediate 7 and end 8, 9 transverse baffles are arranged in parallel and define, each of same, six through-openings 7a, 8a, 9a, framed by the corresponding extensions 7e, 8e, 9e of same, which are aligned with those of the rest of the transverse baffles, each alignment of through-openings 7a, 8a, 9a being passed through, tight-fittedly, by a respective tube of the second C2 or third C3 column of tubes, that is firmly coupled tightly to the extensions 7e, 8e, 9e that frame the openings 7a, 8a, 9a, so that the tubes support the transverse baffles 7, 8, 9 and therefore the longitudinal baffle 6 attached to or integrated with same.

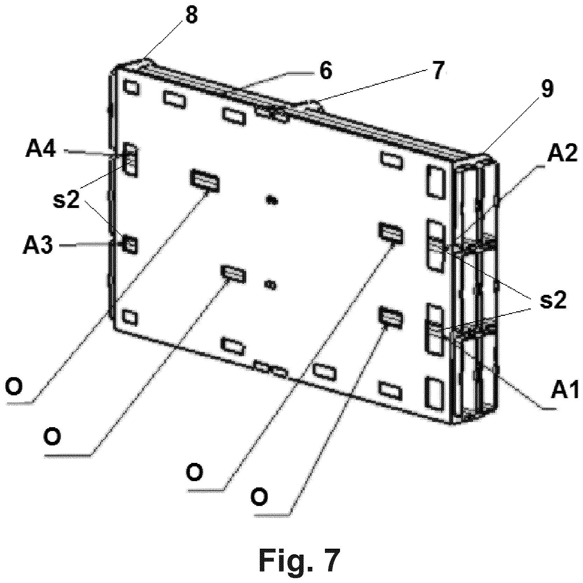

Figure 5 only depicts one of the tubes T inserted into three of the respective aforesaid through-openings 7a, 8a, 9a, while Figures 7 and 8 depict the six tubes T inserted into six respective alignments of openings 7a, 8a, 9a.

The aforesaid through-openings 7a, 8a, 9a have a form suitable for allowing the passage of the tubes T and some protuberant elements 10 arranged on each of the external surfaces of same, as seen in Figures 5 and 8.

In the illustrated embodiment, as can be seen in Figure 3, the cooling fluid outlet orifice 5 is defined in the same wall 2p of the casing 2 in which the inlet orifice 4 is defined, at a point arranged, in a longitudinal direction, between the gas outlet end 2a and said intermediate transverse baffle 7, although in other embodiments (not illustrated) the aforementioned outlet orifice 5 is located in another of the walls of the casing 2.

As can be seen in Figures 4 and 7, the longitudinal baffle 6 comprises some additional through-openings A3, A4 arranged and dimensioned for allowing the passage of the cooling fluid circulating through the inside of the casing 2 towards the cooling fluid outlet orifice 5. Each of the additional through-openings A3, A4 is arranged between a section of passage s1 of the first column of tubes C1 and a section of passage s2 of the second column of tubes C2, in a region adjacent to the gas outlet end 2b of the casing 2, as illustrated in Figure 7 interpreting same with the help of Figure 8.

Likewise, the aforesaid Figures 4 and 7 also depict how the longitudinal baffle 6 comprises several through-holes 0 arranged in various regions of the longitudinal baffle 6 dimensioned for allowing the passage of the circulating cooling fluid to and from intermediate areas of the inside of the casing 2.

In another embodiment (not illustrated), unlike the illustrated embodiment, the cooling fluid inlet orifice 4 is farther away from the area Z than that of the outlet 5, e.g. in inverted positions with respect to the figures (i.e. the inlet orifice 4 where that of the outlet 5 is illustrated, and vice versa). In this case, the longitudinal baffle 6 is arranged farther apart from the wall 2p, towards the inside of the casing 2, e.g. between the antepenultimate and penultimate columns of tubes (where the last column is that illustrated in a higher position in Figure 6), and the cooling fluid would follow a direction opposite to that indicated in Figure 6, i.e. entering via the cooling fluid inlet orifice 4, i.e. that illustrated more to the left, passing through the longitudinal baffle 6 via one or both of the through-openings A3, A4 thereof, following the counterflow with respect to the circulation of the gas flow between the longitudinal baffle 6 and the tubes of the penultimate column, and passing through the baffle again, now by one or both of the openings A1, A2 and being directed in a transverse direction towards the area Z, and from there to the cooling fluid outlet orifice 5, in this case, following a section in parallel, i.e. in the same direction as the circulation of the gas flow. If the outlet orifice is located very close to the area Z, the aforesaid section in parallel with the circulation of the gas flow would not exist, the cooling fluid being directed in such a case directly from the area Z to the cooling fluid outlet orifice 5 in a transverse direction to the circulation of the gas flow.

In the aforesaid embodiment, not illustrated, the longitudinal baffle 6 is arranged inside the casing 2 and suitable for directing the flow of cooling fluid entering via the inlet orifice 4 towards the area Z, not directly through the openings A1, A2 as in the illustrated embodiment, but after first passing through the openings A3, A4 and subsequently A1, A2. I.e. in this case, on the path that goes from the cooling fluid inlet orifice 4 towards the aforesaid sub-area, the cooling fluid passes through the longitudinal baffle 6 twice.

The exchanger of the present invention thus succeeds in not only preventing the overheating and boiling of the cooling fluid, but also provides a good distribution of same through the inside of the casing 2, as well as dispensing with the attachment of the baffles to the casing 2 as these are self-supported by the tubes T themselves. This last point allows the use of non-metallic baffles.

An expert in the field could introduce changes and modifications to the embodiments described without departing from the scope of the invention as defined in the accompanying claims, including the aforesaid possible modifications, e.g. other forms, another number and/or other dimensions (absolute and/or relative) of the various elements that make up the exchanger of the present invention.

## Claims

1. Heat exchanger for gases, in particular the exhaust gases of an engine, which comprises:
- a bundle of tubes (T) intended for the circulation of the exhaust gases;
- a casing (2) that houses therein said bundle of tubes (T), extending longitudinally and which comprises:
- a gas inlet end (2a) and a gas outlet end (2b) on which both support plates are coupled to which the ends of the tubes of said bundle of tubes (T) are attached, communicating with the outside of the casing (2); and
- a cooling fluid inlet orifice (4) and a cooling fluid outlet orifice (5) for the circulation of a cooling fluid through the inside of the casing (2) in contact with the bundle of tubes (T) for heat exchange with the exhaust gases circulating through same;
and
- means for preventing the overheating of said cooling fluid inside the casing (2), which comprise some deflection means arranged inside the casing (2) and suitable for directing the flow of cooling fluid entering via said inlet orifice (4) towards said gas inlet end (2a); wherein said deflection means comprise at least one through-opening (A1) for access to an area (Z) of the inside of the casing (2) adjacent to the gas inlet end (2a), for the passage therethrough of the cooling fluid directed from the cooling fluid inlet orifice (4), said through-opening (A1) being arranged and dimensioned for directing a cooling fluid jet towards a sub-area of said area (Z)and wherein said deflection means comprise two or more of said through-openings (A1, A2) arranged and dimensioned for directing some respective cooling fluid jets towards various sub-areas of the area (Z) **characterised in that** the exchanger comprises a first column of tubes (C1), of said bundle of tubes, stacked longitudinally, where said sub-area or each of said sub-areas covers a section of passage (s1), in the direction of stacking, between two respective adjoining tubes of said first column of tubes (C1).

2. Exchanger according to Claim 1, which comprises at least one second column of tubes (C2), of said bundle of tubes (T), stacked longitudinally, and arranged in parallel with the first (C1), the deflection means comprising a longitudinal baffle (6) arranged between said first (C1) and said second (C2) column of tubes, leaving the through-opening (A1), or each of the through-openings (A1, A2), arranged in said longitudinal baffle (6) between said section of passage (s1) of the first column of tubes (C1) and a section of passage (s2) of the second column of tubes (C2) defined, in the direction of stacking, between two respective adjoining tubes of the second column of tubes (C2).

3. Exchanger according to Claim 2, in which the deflection means include at least one transverse baffle (7, 8, 9) arranged inside the casing (2), and which includes some extensions (7e, 8e, 9e) that block the passage of the cooling fluid flow at least in the circulation direction of the gas flow.

4. Exchanger according to Claim 3, in which said transverse baffle (7, 8, 9), which is at least one, is tightly attached to said longitudinal baffle (6).

5. Exchanger according to Claim 3 or 4, in which said transverse baffle (7, 8, 9), which is at least one, defines two or more through-openings (7a, 8a, 9a), framed by the corresponding extensions (7e, 8e, 9e) of same, each of the through-openings (7a, 8a, 9a) being passed through by a respective tube of at least said second column of tubes (C2).

6. Exchanger according to Claim 5, which comprises a third column of tubes (C3), of said bundle of tubes (T), stacked longitudinally, the tubes of the third column of tubes (C3) also passing through the through-openings (7a, 8a, 9a) of the transverse baffle (7, 8, 9), which is at least one.

7. Exchanger according to Claim 5 or 6, in which said through-openings (7a, 8a, 9a) have a form suitable for allowing the passage of the tubes and some protuberant elements (10) arranged on at least one of their outer surfaces.

8. Exchanger according any one of Claims 3 to 7, in which said transverse baffle (7, 8, 9), which is at least one, is perpendicularly arranged with respect to the longitudinal baffle (6).

9. Exchanger according any one of Claims 3 to 8, in which the transverse baffle (7, 8, 9), which is at least one, is an end transverse baffle (8, 9) arranged next to one of the ends of the longitudinal baffle (6).

10. Exchanger according any one of Claims 3 to 8, in which the transverse baffle (7, 8, 9), which is at least one, is an intermediate transverse baffle (7) arranged away from one of the ends of the longitudinal baffle (6).

11. Exchanger in accordance with Claim 10, in which the cooling fluid inlet orifice (4) is arranged, in a longitudinal direction, between said intermediate transverse baffle (7) and the gas inlet end (2a), closer to the intermediate transverse baffle (7) than the gas inlet end (2a).

12. Exchanger according to Claim 10 or 11, in which the cooling fluid outlet orifice (5) is arranged, in a longitudinal direction, between the intermediate transverse baffle (7) and the gas outlet end (2b).

13. Exchanger in accordance with any one of Claims 2 to 12, in which the deflection means comprise one or more additional through-openings (A3, A4) arranged in the longitudinal baffle (6) for the passage of the cooling fluid from the inside of the casing (2) towards the cooling fluid outlet orifice (5).

## Patentansprüche

1. Wärmetauscher für Gase, insbesondere die Abgase eines Motors, Folgendes umfassend:
- ein Rohrbündel (T), das für die Zirkulation der Abgase bestimmt ist;
- ein Gehäuse (2), das darin das Rohrbündel (T) enthält, das sich in Längsrichtung erstreckt und Folgendes umfasst:
- ein Gaseinlassende (2a) und ein Gasauslassende (2b), an dem beide Trägerplatten gekoppelt sind, an denen die Enden der Rohre des Rohrbündels (T) befestigt sind, die mit der Außenumgebung des Gehäuses (2) kommunizieren; und
- eine Kühlfluideinlassöffnung (4) und eine Kühlfluidauslassöffnung (5) für die Zirkulation eines Kühlfluids durch das Innere des Gehäuses (2) in Kontakt mit dem Rohrbündel (T) für den Wärmeaustausch mit den dort hindurch zirkulierenden Abgasen;
und
- Einrichtungen zum Verhindern des Überhitzens des Kühlfluids innerhalb des Gehäuses (2), die Ablenkeinrichtungen umfassen, die innerhalb des Gehäuses (2) angeordnet und dazu geeignet sind, die Strömung des über die Einlassöffnung (4) eintretenden Kühlfluids zum Gaseinlassende (2a) zu leiten;
wobei die Ablenkeinrichtungen mindestens eine Durchgangsöffnung (A1) für den Zugang zu einem Bereich (Z) des Inneren des Gehäuses (2), der an das Gaseinlassende (2a) angrenzt, für das Durchströmen des Kühlfluids von der Kühlfluideinlassöffnung (4) dort hindurch umfassen, wobei die Durchgangsöffnung (A1) dazu angeordnet und dimensioniert ist, einen Kühlfluidstrahl zu einem Teilbereich des Bereichs (Z) zu leiten, und wobei die Ablenkeinrichtungen zwei oder mehrere der Durchgangsöffnungen (A1, A2) umfassen, die dazu angeordnet und dimensioniert sind, einige jeweilige Kühlfluidstrahlen zu verschiedenen Teilbereichen des Bereichs (Z) zu leiten,
**dadurch gekennzeichnet, dass** der Wärmetauscher eine erste Säule aus Rohren (C1) des Rohrbündels umfasst, die in Längsrichtung gestapelt sind, wobei der Teilbereich oder jeder der Teilbereiche einen Abschnitt des Durchgangs (s1) in Stapelrichtung zwischen zwei jeweils angrenzenden Rohren der ersten Säule aus Rohren (C1) abdeckt.

2. Austauscher nach Anspruch 1, der mindestens eine zweite Säule aus Rohren (C2) des Rohrbündels (T) umfasst, die in Längsrichtung gestapelt und parallel zur ersten Säule (C1) angeordnet sind, wobei die Ablenkeinrichtungen ein Längsablenkblech (6) umfassen, das zwischen der ersten (C1) und der zweiten (C2) Säule aus Rohren angeordnet ist, wobei die Durchgangsöffnung (A1) oder jede der Durchgangsöffnungen (A1, A2) ausgelassen wird, die in dem Längsablenkblech (6) zwischen dem Abschnitt des Durchgangs (s1) der ersten Säule aus Rohren (C1) und einem Abschnitt des Durchgangs (s2) der zweiten Säule aus Rohren (C2) angeordnet sind, die in Stapelrichtung zwischen zwei jeweiligen angrenzenden Rohren der zweiten Säule aus Rohren (C2) definiert sind.

3. Austauscher nach Anspruch 2, wobei die Ablenkeinrichtungen mindestens ein Querablenkblech (7, 8, 9) umfassen, das innerhalb des Gehäuses (2) angeordnet ist und Erweiterungen (7e, 8e, 9e) umfasst, die das Hindurchströmen der Kühlfluidströmung zumindest in die Zirkulationsrichtung der Gasströmung blockieren.

4. Austauscher nach Anspruch 3, wobei das Querablenkblech (7, 8, 9), das mindestens eins ist, fest an dem Längsablenkblech (6) befestigt ist.

5. Austauscher nach Anspruch 3 oder 4, wobei das Querablenkblech (7, 8, 9), das mindestens eins ist, zwei oder mehrere Durchgangsöffnungen (7a, 8a, 9a) definiert, die von dessen zugehörigen Erweiterungen (7e, 8e, 9e) eingerahmt sind, wobei jede der Durchgangsöffnungen (7a, 8a, 9a) von einem jeweiligen Rohr zumindest der zweiten Säule von Rohren (C2) durchlaufen wird.

6. Austauscher nach Anspruch 5, der eine dritte Säule aus Rohren (C3) des Rohrbündels (T) umfasst, die in Längsrichtung gestapelt sind, wobei die Rohre der dritten Säule aus Rohren (C3) ebenfalls durch die Durchgangsöffnungen (7a, 8a, 9a) des Querablenkblechs (7, 8, 9), das mindestens eins ist, verlaufen.

7. Austauscher nach Anspruch 5 oder 6, wobei die Durchgangsöffnungen (7a, 8a, 9a) eine Form aufweisen, die dafür geeignet ist, das Durchlaufen der Rohre und einiger vorstehender Elemente (10), die auf zumindest einer ihrer Außenflächen angeordnet sind, zuzulassen.

8. Austauscher nach einem der Ansprüche 3 bis 7, wobei das Querablenkblech (7, 8, 9), das mindestens eins ist, in Bezug zum Längsablenkblech (6) senkrecht angeordnet ist.

9. Austauscher nach einem der Ansprüche 3 bis 8, wobei das Querablenkblech (7, 8, 9), das mindestens eins ist, ein abschließendes Querablenkblech (8, 9) ist, das neben einem der Enden des Längsablenkblechs (6) angeordnet ist.

10. Austauscher nach einem der Ansprüche 3 bis 8, wobei das Querablenkblech (7, 8, 9), das mindestens eins ist, ein zwischengelagertes Querablenkblech (7) ist, das von einem der Enden des Längsablenkblechs (6) entfernt angeordnet ist.

11. Austauscher nach Anspruch 10, wobei die Kühlfluideinlassöffnung (4) in Längsrichtung zwischen dem zwischengelagerten Querablenkblech (7) und dem Gaseinlassende (2a), näher an dem zwischengelagerten Querablenkblech (7) als dem Gaseinlassende (2a), angeordnet ist.

12. Austauscher nach Anspruch 10 oder 11, wobei die Kühlfluidauslassöffnung (5) in Längsrichtung zwischen dem zwischengelagerten Querablenkblech (7) und dem Gasauslassende (2b) angeordnet ist.

13. Austauscher nach einem der Ansprüche 2 bis 12, wobei die Ablenkeinrichtungen eine oder mehrere zusätzliche Durchgangsöffnungen (A3, A4) umfassen, die in dem Längsablenkblech (6) für das Durchströmen des Kühlfluids vom Inneren des Gehäuses (2) zur Kühlfluidauslassöffnung (5) angeordnet sind.

## Revendications

1. Échangeur de chaleur pour des gaz, en particulier les gaz d'échappement d'un moteur, qui comprend :
- un faisceau de tubes (T), prévus pour la circulation des gaz d'échappement ;
- un boîtier (2) qui loge, dans celui-ci, ledit faisceau de tubes (T), s'étendant longitudinalement et qui comprend :
- une extrémité d'entrée de gaz (2a) et une extrémité de sortie de gaz (2b), sur lesquelles des plaques de support sont couplées, auxquelles les extrémités des tubes dudit faisceau de tubes (T) sont fixées, communiquant avec l'extérieur du boîtier (2) ; et
- un orifice d'entrée de fluide de refroidissement (4) et un orifice de sortie de fluide de refroidissement (5), pour la circulation d'un fluide de refroidissement, à travers l'intérieur du boîtier (2), en contact avec le faisceau de tubes (T), pour l'échange de chaleur avec les gaz d'échappement circulant à travers ceux-ci ;
et
- des moyens pour empêcher la surchauffe dudit fluide de refroidissement à l'intérieur du boîtier (2), qui comprennent certains moyens de déflexion agencés à l'intérieur du boîtier (2) et appropriés pour diriger l'écoulement de fluide de refroidissement, entrant par l'intermédiaire dudit orifice d'entrée (4), vers ladite extrémité d'entrée de gaz (2a) ; dans lequel
lesdits moyens de déflexion comprennent au moins une ouverture de traversée (A1) pour l'accès à une zone (Z) de l'intérieur du boîtier (2), adjacente à l'extrémité d'entrée de gaz (2a), pour le passage à travers celle-ci du fluide de refroidissement dirigé depuis l'orifice d'entrée de fluide de refroidissement (4), ladite ouverture de traversée (A1) étant agencée et dimensionnée pour diriger un jet de fluide de refroidissement vers une sous-zone de ladite zone (Z), et
dans lequel lesdits moyens de déflexion comprennent deux, ou plus, desdites ouvertures de traversée (A1, A2) agencées et dimensionnées pour diriger certains jets respectifs de fluide de refroidissement vers diverses sous-zones de la zone (Z), **caractérisé en ce que** l'échangeur comprend une première colonne de tubes (C1), dudit faisceau de tubes, empilés longitudinalement, où ladite sous-zone ou chacune desdites sous-zones couvre une section de passage (s1), dans la direction d'empilement, entre deux tubes contigus respectifs de ladite première colonne de tubes (C1).

2. Échangeur selon la revendication 1, qui comprend au moins une deuxième colonne de tubes (C2), dudit faisceau de tubes (T), empilés longitudinalement, et agencée en parallèle à la première (C1), les moyens de déflexion comprenant un déflecteur longitudinal (6) agencé entre ladite première (C1) et ladite deuxième (C2) colonnes de tubes, quittant l'ouverture de traversée (A1), ou chacune des ouvertures de traversée (A1, A2), agencées dans ledit déflecteur longitudinal (6) entre ladite section de passage (s1) de la première colonne de tubes (C1) et une section de passage (s2) de la deuxième colonne de tubes (C2), définie, dans la direction d'empilement, entre deux tubes contigus respectifs de la deuxième colonne de tubes (C2).

3. Échangeur selon la revendication 2, dans lequel les moyens de déflexion incluent au moins un déflecteur transversal (7, 8, 9) agencé à l'intérieur du boîtier (2), et qui inclut certaines extensions (7e, Se, 9e) qui bloquent le passage de l'écoulement de fluide de refroidissement au moins dans la direction de circulation de l'écoulement de gaz.

4. Échangeur selon la revendication 3, dans lequel ledit déflecteur transversal (7, 8, 9), qui est au nombre d'au moins un, est fixé de façon serrée audit déflecteur longitudinal (6).

5. Échangeur selon la revendication 3 ou 4, dans lequel ledit déflecteur transversal (7, 8, 9), qui est au nombre d'au moins un, définit deux, ou plus, ouvertures de traversée (7a, 8a, 9a), encadrées par les extensions correspondantes (7e, 8e, 9e) de celui-ci, un tube respectif d'au moins ladite deuxième colonne de tubes (C2) passant à travers chacune des ouvertures de traversée (7a, 8a, 9a) .

6. Échangeur selon la revendication 5, qui comprend une troisième colonne de tubes (C3), dudit faisceau de tubes (T), empilés longitudinalement, les tubes de la troisième colonne de tubes (C3) passant également à travers les ouvertures de traversée (7a, 8a, 9a) du déflecteur transversal (7, 8, 9), qui est au nombre d'au moins un.

7. Échangeur selon la revendication 5 ou 6, dans lequel lesdites ouvertures de traversée (7a, 8a, 9a) ont une forme appropriée pour permettre le passage des tubes et de certains éléments saillants (10) agencés sur au moins une de leurs surfaces extérieures.

8. Échangeur selon l'une quelconque des revendications 3 à 7, dans lequel ledit déflecteur transversal (7, 8, 9), qui est au nombre d'au moins un, est agencé perpendiculairement par rapport au déflecteur longitudinal (6).

9. Échangeur selon l'une quelconque des revendications 3 à 8, dans lequel le déflecteur transversal (7, 8, 9), qui est au nombre d'au moins un, est un déflecteur transversal d'extrémité (8, 9) agencé à côté d'une des extrémités du déflecteur longitudinal (6).

10. Échangeur selon l'une quelconque des revendications 3 à 8, dans lequel le déflecteur transversal (7, 8, 9), qui est au nombre d'au moins un, est un déflecteur transversal intermédiaire (7) agencé de façon éloignée d'une des extrémités du déflecteur longitudinal (6).

11. Échangeur selon la revendication 10, dans lequel l'orifice d'entrée de fluide de refroidissement (4) est agencé, dans une direction longitudinale, entre ledit déflecteur transversal intermédiaire (7) et l'extrémité d'entrée de gaz (2a), plus près du déflecteur transversal intermédiaire (7) que l'extrémité d'entrée de gaz (2a).

12. Échangeur selon la revendication 10 ou 11, dans lequel l'orifice de sortie de fluide de refroidissement (5) est agencée, dans une direction longitudinale, entre le déflecteur transversal intermédiaire (7) et l'extrémité de sortie de gaz (2b).

13. Échangeur selon l'une quelconque des revendications 2 à 12, dans lequel les moyens de déflexion comprennent une ou plusieurs ouvertures de traversée supplémentaires (A3, A4) agencées dans le déflecteur longitudinal (6) pour le passage du fluide de refroidissement depuis l'intérieur du boîtier (2) vers l'orifice de sortie de fluide de refroidissement (5).
